# EUROPEAN PATENT APPLICATION

(11) **EP 0 994 147 A1**
(43) Date of publication of application: **19.04.2000**
(21) Application number: 99119996.9
(22) Date of filing: 14.10.1999
(51) Int. Cl.: C08K 3/00, B32B 27/18, C08K 7/02

(54) **Optical barrier composition and composites comprising it**

(30) Priority: 14.10.1998 US 172951
(71) Applicant: Premark RWP Holdings, Inc., Wilmington, Delaware 19801 (US)
(72) Inventor: Ingrim, Michael, Belton, Texas 76513 (US); Rabroker, Beth, Lott, Texas 76656 (US)
(74) Representative: Akers, Noel James

(57) **Abstract**

Optical barrier compositions are provided that allow the production of thin solid surfacings without the problem of having visual characteristics of the substrate visible through the thin surfacing. The optical barriers are filled thermoplastic which inhibit at least 90% of light transmitted therethrough at a thickness between about 1 and about 50 mils. The optical barriers are designed to be interposed between the substrate and a decorative overlay which is either transparent or translucent.

## Description

### 1. Field of the Invention

The present invention relates to an optical barrier composition including a polymer, a filler, an opacity increasing agent and a fiber, where the composition has an opacity index sufficient to substantially block visibility of a sub-structure when interposed between a surfacing layer and the sub-structure and methods for making and using same.

More particularly, the present invention relates an optical barrier layer including an acrylic resin or polymer, a filler, an opacity agent and a fiber, where the composition in capable of substantially blocking visibility of a sub-structure when interposed between a surfacing layer and the sub-structure and methods for making and using same.

### 2. Description of the Related Art

Decorative laminates prepared by heat and pressure consolidation have been produced commercially for a number of years, and have found widespread acceptance in the building and furniture industry as counter and table tops, bathroom and kitchen work surfaces, wall paneling, partitions and doors. Such decorative laminates can be described as containing a number of laminae that are consolidated to form a composite or unitary structure carrying a surface decoration which can range from something as simple as a solid color to something as complex as an embossed simulated wood grain finish.

Such decorative laminants generally comprise plural layers of synthetic resin impregnated paper sheets consolidated or bonded together into a unitary structure under heat and pressure. In normal practice, the decorative laminant assembly, from the bottom up, consists of a core of one or more sheets impregnated with phenolic resin, above which lies a decorative sheet impregnated with melamine resin.

More recently, surface covering compositions and laminants made of plastics have been introduced into the marketplace. These surface covering differ from impregnated paper laminants in chemical composition and characteristics as well as physical characteristics. Like, paper impregnated layered laminants, these plastic surfacing compositions are designed to be either bonded to a reinforcing substrate, such as plywood, hardboard, asbestos board, particle board, extrudable substrates or the like, or co-extruded with such substrates. These plastic-based coverings use structural plastics, such as acrylonitrile-butadiene-styrene (ABS) resin, poly(vinyl chloride) (PVC) resin, polycarbonate as counter-tops, bathtubs, and shower stalls is known. Examples of such plastic-based surfacings are described in U.S. Patent Nos. 4,085,246, 4,458,039, 4,533,680, 4,938,825 and 5,318,737, incorporated herein by reference.

One drawback to plastic surface covering is there lack of opacity allowing the surface characteristics of the substrate to show through the decorative pattern of the plastic surfacing layer. Thus, it would represent an advancement in the art to be able to make plastic surfacings with improved optical barrier characteristics to inhibit or prevent visual bleeding of the surface characteristics of the substrate through the plastic surfacings.

### SUMMARY OF THE INVENTION

According to one embodiment of the present invention, there is provided an optical barrier composition including a polymer, a filler, an opacity agent and a fiber, where the composition is capable of substantially blocking visibility of a substrate's surface characteristics when interposed between a surfacing with minimal opacity and the sub-structure or substrate.

According to another embodiment of the present invention, there is provided an optical barrier composition including an acrylic resin or polymer, a filler, an opacity agent and a fiber, where the composition is capable of substantially block the visibility of a sub-structure when interposed between a top surface of solid surface laminant disposed on a sub-structure.

According to even another embodiment of the present invention, there is provided a surfacing composite structure or laminant including a decorative surface layer and an optical barrier composition of the present invention.

According to still another embodiment of the present invention, there is provided a surfacing composite structure or laminant including a decorative plastic surface layer and an optical barrier composition of the present invention.

According to yet another embodiment of the present invention, there is provided a solid surfaced composite including a substrate, a decorative surface layer disposed on the substrate and an optical barrier composition at the present invention interposed between the surface layer and the sub-structure or substrate.

According to even still another embodiment of the present invention, there is provided a solid surfaced composite including a substrate, a decorative plastic surface layer and an optical barrier composition of the present invention interposed between the surface layer and the substrate.

According to even yet another embodiment of the present invention, there are provided methods for making the optical barrier compositions of the present invention, methods for making the composite or laminant structures incorporating the optical barriers of the present invention and methods for making the solid surfaces incorporating the optical barriers of the present invention.

According to still even another embodiment of the present invention, there are provided methods for using the optical barrier compositions of the present invention in solid surfaced articles.

These and other embodiments of the present invention will become apparent to those of skill in the art upon review of this specification, including its claims.

### DETAILED DESCRIPTION OF THE INVENTION

The inventors have found that decorative surfacing composites or laminants can be prepared that have enhanced optical barrier properties or enhance opacity so that surface characteristics of the substrate on which the decorative surface is applied does not bleed or show through the surfacing composite. The optical barriers of the present invention are well-suited to applications involving the surfacing of substrates with plastic based surfaces coverings or laminants as well as traditional impregnated paper laminants which do not have adequate opacity to prevent bleeding (visibility) of the visual surface characteristics and features of the substrate through the covering.

In the production of decorative laminates or covering, either of a traditional paper based formulation or of a plastic based formulation, the surface coverings generally include one or more layers of laminae where the upper layers include a decorative pattern or design. Typically, decorative paper-based laminants includes several layers of thermosetting resin impregnated core stock (preferably kraft paper) supporting a thermosetting resin impregnated decorative layer, which may be further overlaid with a thermosetting resin impregnated overlay sheet. The thermosetting resin employed is preferably a phenol formaldehyde resin for the core stock, and preferably a clear melamine formaldehyde resin for the decorative and overlay sheets. The decorative or overlay sheets also be textured.

Generally, a number of paper-based laminants are made simultaneously with release sheets therebetween. Upon pressing between suitable laminate press plates, the layered paper-based composites are cured into desired laminants. A platen press assembly as is well known in the lamination art is utilized to provide the necessary heat and/or pressure during lamination.

Typically, plastic-based decorative coverings are extruded thin sheets with good physical properties. The optical barrier compositions of the present invention are preferably designed to be used in conjunction with high-pressure decorative laminants that can be processed and handled like conventional high-pressure decorative laminates, but have the properties and advantages of much thicker solid surfacing and veneer materials. These latter laminants are generally thin thermoplastic sheets that have the properties of translucency, high hardness, handleability and are thinner than conventional solid surfacing and veneer materials, but retains the look, feel and durability of such conventional solid surfacing and veneer materials. Thermoplastics of considerable utility in the manufacture of such laminants are acrylic polymers or resins.

These thermoplastic laminants are extrudable and ideally suited as counter top base materials exhibiting good scratch resistance, hardness, renewability, and machinability. The term "machinability" is used to denote the ability of the thermoplastic acrylic sheet to be machined with conventional high pressure decorative laminate equipment. The term "renewability" is used to denote the ability to remove scratches and other marks on the surface of the thermoplastic acrylic sheet by sanding, preferably wet-sanding, or other abrasive means to result in a surface that contains no readily visible marks.

One preferred class of plastic-based laminants for use with the optical barriers of the present invention are thermoplastic acrylic sheets composed of a thermoplastic acrylic polymer, fillers, and an impact modifier. The target physical properties include a Barcol hardness of the sheet of 40 or greater, preferably 50 or greater, more preferably 55 or greater, a melt flow index of at least 1.5, translucency, handleability, reduced thickness and good look, feel and durability. These type of polyacrylic materials are widely commercially available and provide a perception of depth, a simulated marble or granite appearance and provide renewability of the material's surface.

The present invention addressed a need to provide better optical barriers between thinner plastic-based (generally acrylic based) laminants to inhibit or prevent optical bleed of the surface characteristics of the substrate through the acrylic-based laminants. Although the present optical barriers are designed to operate in close cooperation with acrylic based laminant formulations, the optical barriers of the present invention find broad application when used in combination with any laminant that has undesirable optical bleed through properties (the laminant permits visual surface characteristics of the substrate to show through) which compromises the look of the final product.

The present invention addresses the above described optical bleed through problem by providing an polymeric composition that can be formed into sheets that have opacity characteristics sufficient, such that when this sheet is positioned between the decorative layer and the supporting substrate, it will prevent visible bleed through of the visual characteristics of the substrate to the decorative layer. These optical barrier compositions are suitable for use with surfacing materials so that the thickness of the resulting composite sheet (optical barrier layer, decorative layer, and substrate) is comparable to conventional wood or paper high pressure decorative laminates.

The thermoplastic optical barrier compositions of the present invention can be separately prepared or can be prepared by coextrusion with the decorative layer. Generally, the optical barrier layers of this invention are designed for use with thermoplastic acrylic sheet compositions which are translucent to provide the resulting product with an appearance of surface depth, similar to the appearance obtained with conventional 1/8" veneer or 1/2" solid surfacing materials. Further, the opaque layers of this invention provide the resulting laminate with superior handling properties as compared to the thermoplastic acrylic sheet composition alone, such as improved handling, bending and flexibility.

In one preferred embodiment there is provided, a product comprising a decorative transparent or translucent layer backed with an opaque layer of this invention. The decorative layer can be any layer designed to carrier the decorative aspects of the final laminant structure (decorative layer backed by the optical barrier layer of this invention). The decorative and opaque layers can have the same or different thickness. Just from an economic standpoint, the opaque layer is preferably as thin as possible, with a desirable goal to make the opaque thinner than the decorative layer, keeping in mind of course, that the opaque layer is to be bonded to the surface of a substrate blocking visibility of the visual characteristics of the substrate.

In a preferred embodiment, the decorative layer and optical barrier layer or opaque layer are co-extruded (with the opaque layer will sometimes be referred to as the "cap" layer and the decorative layer will sometimes be referred to as the "base" layer following conventional co-extrusion terminology). The cap layer broadly comprises a thermoplastic, a filler, an opacity agent and a fiber. The optical barrier layer can also include other additives and can be colored to enhance visual characteristics of the decorative layer superposed thereon.

The preferred embodiment of the opaque layer composition includes in the range of about 50 weight percent to about 90 weight percent of a thermoplastic, in the range of about 5 weight percent to about 50 weight percent of a filler, from about 1 weight percent to about 10 weight percent of an opacity agent and about 1 weight percent to about 10 weight percent of a fiber, all weight percentages being based on the total weight of thermoplastic, filler, opacity agent and fiber.

The base layer and cap layer can be joined by a variety of methods, such as contacting the layers under heat and pressure, by use of an appropriate adhesive, or by coextrusion of the base and cap. When coextrusion is used the base and cap should be compatible or miscible with one another so that strong interfacial bonding can occur. The term "compatible" is used to denote good interfacial adhesion between the constituent polymers, while the term "miscibility" is used to denote single-phase behavior. These terms are well known to those skilled in the art and are the subject of the treatise: "Polymer-Polymer Miscibility," by Olabisi et al, Academic Press, NY, 1979, herein incorporated by reference.

Preferably, the laminate is formed by a stratified multi phase flow commonly referred to in the polymer processing industry as coextrusion. In accordance with the present invention a conventional flat-sheet forming die is provided in which the different layers are assembled. Accordingly, the base layer comprises a coextruded thermoplastic acrylic polymer having dispersed therein a mineral filler and an impact modifier, and optionally a pigment and/or one or more conventional additives; the cap layer comprises a coextruded thermoplastic resin having dispersed therein a filler, an opacity agent or pigment and a fiber.

In the present invention the laminate, is preferably formed by a co-extrusion process. Thus, the ingredients for the base layer and the cap layer are compounded in an extruder as described above for the extruded thermoplastic acrylic sheet to form a pelletized masterbatch for the base layer and one for the cap layer. The compositions for the two layers are subsequently extruded through separate extruders, where the temperature of each extruder is adjusted to attain similar melt flow viscosities. The laminate is preferably produced using a standard flow divider and sheet die.

Preferably, the thickness of the optical barrier layer is in the range of about 1 and about 50 mils, with the upper limit occurring when the combined or coextruded structure warps during manufacturing due to differential thermal expansion and contraction properties. Preferably, the thickness of the opaque cap or barrier layer is in the range of about 2 and about 20 mils with thicknesses between about 5 and about 15 mils being particularly preferred. Generally, the thickness of the base or decorative layer is in the range of about 10 and about 70 mils thick and preferably between about 25 and about 60 mils thick and particularly between about 45 and 55 mils thick.

In the resulting laminate, the base layer and the cap layer composition should be selected to have similar thermal coefficients of expansion so that the two materials expand and contract similarly. Preferably, the layers should have thermal coefficients of expansion that differ from one another by no more than 25%, more preferably by no more than 10%, and particularly by no more than 5% in order to avoid differential thermal strain resulting in warpage, curling and twisting of the laminate during production.

### Thermoplastics

Suitable thermoplastics for use in the optical barrier of the present invention are preferably compatible or miscible with the thermoplastics of the decorative over layer of base layer. Such thermoplastic resins include, but are not limited to, thermoplastic acrylic polymers, acrylonitrile-butadiene-styrene copolymers (ABS), poly(vinyl chlorides) (PVC), acrylonitrile-styrene-acrylates (ASA), styrene-acrylonitriles (SAN) and polycarbonates (PC).

Thermoplastic acrylic polymers comprise at least 90 weight percent, preferably at least 98 weight percent, most preferably 100 wt %, based on the total thermoplastic acrylic polymer of a homo or copolymer of methyl methacrylate. Suitable copolymerizable monoethylenically unsaturated monomers may be represented by the general formula (I):

CH₂=C(R¹)COOR² (I)

where R¹ is a hydrogen or a C₁-C₃ alkyl group, and R² is a C₁-C₂₀ alkyl group, phenyl, benzyl, hydroxy-(C₁-C₄)-alkyl, alkoxy-(C₁-C₄) alkyl, cyclopentyl, cyclohexyl, and combinations of these monomers thereof. Combinations of monomers where R¹ is hydrogen and monomers where R² is an alkyl group are used to modify the glass transition temperature (Tg) of the polymer. Preferred examples of comonomers are, but not limited to, methyl(meth)acrylate, ethyl(meth)acrylate, propyl (meth)acrylate, isopropyl (meth)acrylate, butyl (meth)acrylate, isobutyl (meth)acrylate, hexyl (meth)acrylate, isooctyl (meth)acrylate, isodecil (meth)acrylate, laurel (meth)acrylate, stearyl (meth)acrylate, phenoxyethyl (meth)acrylate, methoxyethyl (meth)acrylate, benzyl (meth)acrylate, epoxyethyl (meth)acrylate, 2-ethylhexyl (meth)acrylate, cyclopentyl (meth)acrylate and isobornyl (meth)acrylate, as well as combinations of those monomers thereof. The term "alkyl" is used to denote straight chain or branched alkyl groups. A combination of these monomers may be used in order to achieve an appropriate Tg or other properties for the thermoplastic acrylic polymer. The term "(meth)acrylate" is used to denote an acrylate or a methacrylate monomer. It is preferred that the thermoplastic acrylic polymer has a Tg between 90 and 130°C, more preferably between 95 and 110°C. The thermoplastic acrylic polymer is preferably selected from poly(meth)acrylates sold under the tradename ACRYLITE by Cyro.

Additional suitable copolymerizable monoethylenically unsaturated monomers include styrenic monomer. Styrenic monomer denotes styrene, or a substituted styrene such as C₁-C₆ alkyl ring-substituted styrene, C₁-C₃ alkyl α-substituted styrene or a combination of ring and α-alkyl substituted styrene. Preferred styrenic copolymerizable monomers include styrene, p-methylstyrene, o-methylstyrene, p-butylstyrene, α-methylstyrene and combinations thereof.

A preferred molecular weight for the acrylic thermoplastic polymer is in the range of about 100,000 to about 220,000, preferably in the range of about 120,000 to about 180,000, and most preferably in the range of about 130,000 to about 150,000 number average molecular weight (Mn). In the present invention it is more advantageous to describe the acrylic polymer with respect to its melt flow index (MFI), since the MFI of a polymer takes into consideration not only its molecular weight but also its polymer chain structure with respect to linearity, branching, crosslinking, etc. The acrylic polymer of the present invention has a MFI of at least 1.5, preferably in the range of about 1.5 to about 30, more preferably in the range of about 1.5 to about 3.8, still more preferably in the range of about 3.0 to about 3.5, most preferably about 3.4.

### Fillers

Suitable fillers for use in the present invention include those fillers that impart sufficient hardness and machinability to the compositions of this invention. Generally, the fillers are present in the range of about 20 weight percent to about 60 weight percent based on the total weight of the composition, more preferably in the range of about 35 to about 55 weight percent, most preferably in the range of about 40 to about 50 weight percent. Preferred fillers have a Mohs hardness of at least 2.5, more preferably in the range of about 2.5 to about 7, still more preferably from about 4 to about 5, most preferably about 4.5.

Preferred fillers include wollastonite, mica, CaCO₃, silica, clays, silicates, aluminates, aluminas, or the like or combinations or mixtures thereof. The preferred fillers are wollastonites. The use of different colors of fillers in the present composition can be employed to provide color matching between the optical barrier layer and the decorative overlayer for enhancement of pattern appearances.

Preferred wollastonites include, without limitation, Woll 266 (from American Minerals), KCL-12F (from Nyco), KCL-15F (from Nyco) and NYAD 325 (from Nyco). Depending on the properties desired in the final sheet prepared, the wollastonites noted above can be used singly or in combinations, with or without surface treatment, such as silane surface treatment, with the differences in aspect ratios of the products causing various changes in the physical properties of the resulting sheets. For example, the use of 20-25% of Woll 266 shows a significant increase in ultimate tensile stress, ultimate tensile strain, tensile toughness, ultimate flexural stress, ultimate flexural strain and flexural toughness of the prepared sheet compared to the use of 40% NYAD 325.

### Opacity Agents

Suitable opacity agent (agents that increase the opacity or decrease light transmission through the optical barrier material) include, but are not limited to, TiO₂, fumed silica, mixed metal oxides containing titania such as metal titanates, lead oxide, zinc oxide, antimony oxide, other similar whitening agents or mixtures and combination thereof. The preferred opacity agents are TiO₂ and titanates with TiO₂ being particularly preferred.

The optical barrier composition of the present invention are designed to be substantially opaque. In one preferred embodiment, the optical barrier compositions of the present invention include an amount of an opacity agent sufficient to render a sheet composed of the barrier material substantially opaque, where the term substantially opaque means that the sheet blocks the transmission greater than about 90% of light therethrough, preferably, greater that about 95% of light and especially greater than about 99% of light.

### Fibers

Suitable fiber for use in the optical barrier composition of this invention include, without limitation, glass fibers, chopped Kevlar fiber or other chopped polyamide fibers, chopped polyimide fibers, alumina fibers, mineral fibers, boro-silicate fibers, boron-nitride fibers, other organic or inorganic fibers, other mixture and combination thereof. The fibers preferably have a length, between about ½" and 1/32". Preferably, the fibers having lengths up to about 1/8" and particularly, lengths up to about 1/16".

Glass fibers are preferred and preferred glass fibers include milled, silane treated or otherwise sized glass fibers having a length of up to 1/8", preferably of a length of up to 1/16". Suitable glass fibers can be obtained using any type of commercially available glass fiber, such as Type E, Type S and Type C glass fibers.

### Additives

The optical barrier composition of the present invention can also include other additions. Such additives include, without limitation, fire retardant agents such as a fire retardant polymer (e.g. polyvinyl chloride, polyvinylidene chloride), a fire retardant monomer (e.g., bis-(b-chloroethyl) vinylphosphate) and an inorganic chemical such as zinc phosphate; processing aids; stabilizers; antioxidants; antimicrobials; release agents; a dyes; particulate materials, or mixtures and combinations thereof.

Such commercially available additives include, without limitation, fire retardants under the trade names ANTIBLAZE, available from Albright Wilson; FR fire retardants available from Amerbrom; Antimony Trioxide under the trade names AZ 12, AZ 14, AZ 15 and TruTint, available from Anzon America; SAYTEX flame retardants available from Ethyl Corporation; PYRO-CHEK flame retardants, available from Ferro; SAN-70/30, EVA-80/20, THERMOGUARD 212, THERMOGUARD 213, THERMOGUARD 215, THERMOGUARD 240, available from M&T Chemicals, FYREBLOC ANTIMONY OXIDE H, FYREBLOC ANTIMONY OXIDE L, FYREBLOC ANTIMONY OXIDE MH, FYREBLOC S GRADES, available from McGean-Rohco ; colloidal antimony oxide flame retardants under the trade names A1510LP, A1530, A1550, AP50, APE1545, APVC45, A1582, A-1540N, N24, ADP480, ADP494, available from Nyacol Products.

Suitable commercially available particulate materials include, without limitation, natural or synthetic minerals or materials such as agate, alabaster, albite, calcite, chalcedone, chert, feldspar, flint quartz, glass, malachite, marble, mica, obsidian, opal, rock gypsum, sand, silica, travertine, and moderately filled or unfilled, pigmented or dyed, insoluble or crosslinked chips of polymers, such as ABS resins cellulose esters, cellulose ethers, epoxy resins, polyethylene, melamine resins, phenolic resins, polyacetals, polyacrylics, polydienes, polyesters, polystyrenes, urea/formaldehyde resins, polyureas, polyurethanes, polyvinyl chloride and the like.

Suitable processing aids include, without limitation, those sold under the trade names: LUBRICIN, PARACIN CALCIUM RICINOLEATE, available from Caschem; METABLEN P series, available from M&T Chemicals; ACRYLOID K series, such as K-120N, K-120N-D, K-125, K-147, K-147, K-175, KM-318F, KM-323B, KM-330, KM-334, KM-608A, KM-611, KM-641, KM-653, KF-710, as well as those under the trade name PARALOID BTA series, available from Rohm and Haas.

Suitable stabilizers include, without limitation, ultraviolet (UV) stabilizers such as those commercially available, hindered amine or benrophenone classes, under the trade name CYASORB UV series, available from American Cyanamid; heat stabilizers under the trade name CYASTAB series, lead carbonate, lead phosphate or lead phthalate salts, available from American Cyanamid; those under the trade name MARK VINYL STABILIZERS series available from Argus Chemical.

Suitable antimicrobials (bactericides/fungicides) include, without limitation, MICRO-CHEK antimicrobial agents, available from Ferro; INTERCIDE antimicrobial agents, available from Interstab Chemical; THOR PMDDS, PMA 100 or THORCAT PMA6/DPG antimicrobial agents from Thor Chemicals; and VANCIDE bactericide/fungicides from R. T. Vanderbilt.

Suitable antioxidants include, without limitation, those under the trade name CYANOX series available from Amarican Cyanamid; HOSTANOX series available from American Hoechst; ULTRANOX series available from Borg-Warner; IRGANOX series available from Ciba-Geigy; all of which are hindered phenols.

Suitable release agents include, without limitation, those under the trade name MOLD WIZ series available from Axel Plastics; CENTROPHIL, available from Central Soya; MOLGARD, PLASTILEASE, BULK SILICONE, available from RAM; the above are inorganic wax or silicone compositions.

The optical barrier composition of the present invention may also contain, if desired, filled crystalline thermoplastic resin chips such as those described in U.S. Patent 5,457,152, the relevant portions of which are hereby incorporated by reference.

Suitable impact modifiers include, without limitation, FM10 and FM20 available from Kaneka Texas Corporation; DURASTRENGTH 200 and METABLEND S-2001 available from Elf Atochem; KM334 available from Rohm and Haas and BLENDEX 980 available from General Electric, thermoplastic elastomers (TPE) including thermoplastic urethane elastomers (TPU) , such as DESMOPAN available from Bayer; styrene-butadiene TPE such as available from Shell under the trade name KRATON; styrene polyolefin TPE such as available from Shell under the trade name KRATON G or ELEXAR. TPE impact modifiers may be used alone or in combination; combinations of TPE impact modifiers with core-shell modifiers are also possible.

When the optical barriers or laminants of the present invention are being bonded to a substrate to be covered, it is preferred that the surface area of the laminant be increased by roughening in order to improve the adhesion between the optical barrier layer of the laminate and the substrate. This roughening can be performed in a number of different ways, with sanding and embossing being preferred. When the roughening is performed by embossing, the optical barrier and laminate is preferably embossed at approximately the same time as it is being extruded, provided that there is sufficient lapse of time between the extrusion die and the embossing rolls to allow the optical barrier or the laminate to cool sufficiently to retain the embossing pattern. However, it is also possible to emboss the optical barrier and laminate merely by reheating the product and passing it through an embossing roll at a temperature sufficient to impart and retain the embossing pattern. The determination of the appropriate parameters for embossing such optical barrier and laminates, either during the extrusion and cooling process or after the formation of the optical barriers and laminates, is well within the purview of those of ordinary skill in the art. Preferred substrates include wood based products, such as particle board, fiberboard or plywood; polymeric materials, such as thermosets or thermoplastics; and metals.

When binding the thermoplastic acrylic sheet or the laminate of the present invention to a substrate, any conventional adhesives can be used, so long as they are suitable for binding the polymer of the cap layer to the type of substrate chosen. A most preferred adhesive for bonding an acrylic cap layer to a particle board substrate is an ethylene-vinyl acetate (EVA) water based emulsions. For example, Lokweld 3000 (LW3000) adhesive made by Wilsonart International is an EVA based product suitable for this application. To achieve substrate failure type bond strength, the EVA emulsions should be modified with one or more water dispersible urethane additives such as Dispercoll U54 and Desmodur DA. These materials are produced by Bayer Corporation and are used at levels equivalent to 2%wt. and 0.1%wt.of LW3000. Adhesion can be further improved by the addition of some minor amounts of one or more high boiling, non-VOC solvents such as methyl propyl ketone at 5% by weight of that of LW3000. Other EVA water based emulsions, water dispersible urethane additives and solvents can be used, although they are not as effective as the above noted combination. The EVA water based emulsion, water dispersible urethane additive and high-boiling non-VOC solvent can be mixed in any order using conventional procedures. The adhesives can be sprayed onto the substrate or roll coated with a glue spreader. Strong bonds can be obtained by either pinch rolling or cold pressing the assembly.

While optical barriers of the present invention have been described mainly by reference to use with laminates, mainly plastic laminates, the inventors envision use of these optical barriers with a wide variety of other products.

For example, the optical barrier of the present invention may also be used with microveneer decorative laminate, disclosed in U.S. Patent Application Serial No. 09/082,872, filed May 21, 1998, herein incorporated by reference. Microveneer decorative laminate may generally be described as including a decorative layer that may be either a solid color or print decorative paper having a coating of resin on its wear surface, a resin impregnated glueable backing, and optionally, one or more resin impregnated core layers, and further optionally, one or more resin impregnated overlay layers. In one method of making microveneer decorative laminate, resin is first impregnated into overlay and partially cured. The overlay is positioned over decorative solid color or print paper that has not been impregnated with resin, and optionally along with one or more resin impregnated core sheets, and a resin impregnated backing sheet, all of which are laminated togther under heat and pressure. The resin content in the overlay is adjusted for providing the amount of resin needed for a wear resistant surface and for impregnating the decorative paper. In another method of making microveneer decorative laminate, resin is coated on the decorative surface of solid color decorative paper, which is laminated along with one or more optional resin impregnated core sheets and the resin impregnated backing sheet. The resin impregnates the decorative paper and is partially cured.

As another example, the optical barrier of the present invention may also be used with metal products, decorative films, foils, sheets, or the like, made of metals.

As even another example, the optical barrier of the present invention may also be used with solid surface materials, typically polyacrylics containing various fillers. Commercially available products include Gibralter™ products sold by Wilsonart International, Inc.

As still another example, the optical barrier of the present invention may also be used with solid surface veneer, conventionally thinner solid surfacing materials, typically polyacrylics containing various fillers, such as the commercially available SSV™ products (1/8" thick) sold by Wilsonart International, Inc.

As yet another example, the optical barriers of the present invention may also be used with solid surface laminate, that is, very thin solid surfacing products (<100 mil thick solid surfacing products), typically polyacrylics containing various fillers, which are disclosed in U.S. Patent Application Serial No. 08/899,118, filed July 23, 1997, herein incorporated by reference.

As even still another example, the optical barriers of the present invention may also be used with solid surfacing dimensional laminate, disclosed in U.S. Patent Application Serial No. 09/161,265, Gaa, filed September 26, 1998, and herein incorporated by reference. Such a solid surfacing dimensional laminate has an enhanced appearance of pattern depth, provided by having overlaying layers of patterned decorative sheets positioned such that each pattern or part thereof is visible through the top of the final consolidated laminate. A plurality of patterned decorative layers are laid-up such that each pattern is off-set one from another making each pattern visible through the top decorative layer or overlay sheet of the formed laminate. As a non-limiting example, suppose that each pattern is a wood grain pattern, then during lay-up each wood grain pattern would be arranged so that the patterns do not substantially overlap, *i.e*., the patterns are offset in the xy plane one from the other.

While the illustrative embodiments of the invention have been described with particularity, it will be understood that various other modifications will be apparent to and can be readily made by those skilled in the art without departing from the spirit and scope of the invention. Accordingly, it is not intended that the scope of the claims appended hereto be limited to the examples and descriptions set forth herein but rather that the claims be construed as encompassing all the features of patentable novelty which reside in the present invention, including all features which would be treated as equivalents thereof by those skilled in the art to which this invention pertains.

## Claims

1. An optical barrier composition characterized by:
a. a thermoplastic;
b. a filler;
c. an opacity agent; and
d. a fiber;
where the barrier blocks of greater than 90% of light transmission there through at a thickness between 1 and 50 mils.

2. The composition of claim 1, wherein wollastonite, mica, CaC0₃, silica, clays, silicates, aluminates, aluminas, or the like or combinations or mixtures thereof.

3. The composition of claim 1 or 2, where in the filler is wollastonite.

4. The sheet according to any of the preceding claims, wherein the filler has an aspect ratio of 3:1 to 20:1.

5. The composition according to any of the preceding claims, wherein the first and second thermoplastics are the same or different and are selected from the group consisting of a thermoplastic acrylic polymer, acrylonitrile-butadiene-styrene (ABS) resin, poly(vinyl chloride) (PVC) resin, acrylonitrile-styrene-acrylate (ASA)resin, styrene-acrylonitrile (SAN) resin, polycarbonate (PC), and mixturesand combinations thereof.

6. The according to any of the preceding claims, wherein the thermoplastic is an acrylic.

7. The composition according to any of the preceding claims, wherein the acrylic has a melt flow index of 1.5 to 30.

8. The composition according to any of the preceding claims, wherein the melt flow index is from 1.5 to 3.8.

9. The sheet according to any of the preceding claims, further comprising one or more additives selected from the group consisting of fire retardants, particulate materials, processing aids, stabilizers, antioxidants, antimicrobials and release agents.

10. An optical barrier sheet having a thickness between 1 and 50 mils of a composition characterized by
a. a thermoplastic;
b. a filler;
c. an opacity agent; and
d. a fiber;
where the barrier blocks of greater than 90% of light transmission there through.

11. The sheet according to any of the preceding claims, wherein the sheet is prepared by extrusion or casting.

12. The sheet according to any of the preceding claims, wherein the thickness is from 5 to 25 mils.

13. The sheet according to any of the preceding claims, wherein the sheet blocks said thermoplastic acrylic sheet is translucent.

14. The according to any of the preceding claims, wherein the opacity agent is Ti0₂.

15. A laminate characterized:
a. a decorative layer characterized by:
i. a first thermoplastic;
ii. a first filler; and
iii. an impact modifier;
b. an opaque layer characterized by:
i. a second thermoplastic;
ii. a second filler;
iii. an opacity agent; and
iv. a fiber;
where the barrier blocks of greater than 90% of light transmission there through.

16. The laminate according to any of the preceding claims, wherein the first and second thermoplastics are the same or different and are selected from the group consisting of a thermoplastic acrylic polymer, acrylonitrile-butadiene-styrene (ABS)resin, poly (vinyl chloride) (PVC) resin, acrylonitrile-styrene-acrylate (ASA)resin, styrene-acrylonitrile (SAN) resin, polycarbonate (PC), and mixtures and combinations thereof.

17. The laminate according to any of the preceding claims, wherein the laminant is formed by coextrusion.

18. The laminate according to any of the preceding claims, further characterized by an adhesive layer interposed between the opaque layer and the decorative layer.

19. The laminate according to any of the preceding claims, wherein the first and second fillers are wollastonite, mica, CaC0₃, silica, clays, silicates, aluminates, aluminas, or the like or combinations or mixtures thereof.

20. A composite characterized by:
a. a substrate and
b. a laminant disposed on a surface of the substrate, where the laminant characterized by:
i. a decorative layer characterized by:
(a) a first thermoplastic;
(b) a first filler; and
(c) an impact modifier;
ii. an opaque layer characterized by:
(a) a second thermoplastic;
(b) a second filler;
(c) an opacity agent; and
(d) a fiber;
where the barrier blocks of greater than 90% of light transmission there through.

21. A laminate characterized by:
a. a decorative layer selected from the group consisting of solid surface materials, solid surface veneer, solid surface laminate, and solid surface dimensional laminate.
b. an opaque layer affixed to the decorative layer characterized by a thermoplastic, a filler, an opacity agent, and a fiber; where the opaque layer blocks of greater than 90% of light transmission there through at a thickness between 1 and 50 mils; and
c. a substrate layer affixed to the decorative layer.
